# EUROPEAN PATENT SPECIFICATION

(11) **EP 4 047 621 B1**
(45) Date of publication and mention of the grant of the patent: **10.09.2025**
(21) Application number: 22157143.3
(22) Date of filing: 16.02.2022
(51) Int. Cl.: H01B 3/42, C08L 67/03

(54) **THERMOPLASTIC BASED ARC RESISTANT MATERIAL FOR ELECTRICAL APPLICATION**
LICHTBOGENFESTES THERMOPLASTISCHES MATERIAL FÜR ELEKTRISCHE ANWENDUNG
MATÉRIAU RÉSISTANT À L'ARC À BASE DE THERMOPLASTIQUE POUR APPLICATION ÉLECTRIQUE

(30) Priority: 17.02.2021 US 202117177936
(43) Date of publication of application: 24.08.2022
(73) Proprietor: Eaton Intelligent Power Limited, Dublin 4 (IE)
(72) Inventor: GANESAN, Prasath Balamurugan, 411014 Pune (IN); RAMACHANDRAN, Anand Kumar, 411014 Pune (IN); MAPKAR, Javed A., Northville, 48167 (US); COX, Jeffrey, Venetia, 15367 (US)
(74) Representative: Wagner & Geyer

(56) References cited:
- EP-A1- 1 313 121
- EP-A1- 2 588 531
- EP-B1- 2 370 517
- EP-B1- 2 588 531
- EP-B1- 3 116 943
- WO-A1-2018/026752
- WO-A1-2020/165018
- WO-A1-2021/090095
- US-A1- 2016 289 416

## Description

### BACKGROUND

### 1. Field

The disclosed concept pertains generally to thermoplastic based sustainable insulation materials for electrical contact and non-contact applications, to withstand arcing and electrical discharge during a short circuit event to ensure circuit protection.

### 2. Background

During a short-circuit event, overload current which is about several orders of magnitude of rated current passes through electric circuit. In order to protect the circuit from the damage caused by the overload current, circuit interrupters disengage the electrical contact temporarily. The excess current passing through the circuit is discharged instantaneously in the form a high-energy arc. The arc generated needs to be quenched or extinguished immediately to prevent the further progression of fire to ensure safety.

Generally, insulators are used for circuit protection in such electrical contact / non-contact applications, as enclosures, encapsulated or over-molded parts, connectors, switches and the like. Thermoset materials, e.g., epoxies and unsaturated polyesters, are generally known for use in electrical and electronic systems as insulation material, and to protect electrical components from short-circuiting. These thermoset materials are employed as adhesives, sealants, coatings, impregnants, enclosures, moldings and potting compounds to produce void-free insulation around the electrical components. Amine-cured epoxies and anhydride-cured epoxies are frequently employed as adhesives, sealants, impregnants and coatings. The anhydride-cured epoxies are primarily employed for encapsulation and potting purposes. The amine-cured epoxies are used in overmolding electrical components.

A specific thermoset material is selected for a given application based on multiple factors, such as, desirable dielectric properties, as well as physical and mechanical strength, chemical resistance, operating temperature range and thermal cycling, dimensional stability, resistance to mechanical creep under load, and resistance to shock and vibration. The desirable dielectric properties include dielectric strength, partial discharge resistance, volume resistivity, surface resistivity, dielectric constant, arc resistance and dissipation factor. These properties can be affected by temperature and, the addition of inorganic fillers, such as, silica, alumina and glass.

However, there are disadvantages associated with known thermoset materials. Thermosets being a cross-linked material, once a molded part is no longer needed for its intended use, it must be either be landfilled or incinerated. In both situations, the carbon footprint is on the higher side. Also, during thermoset molding, the toxic and volatile emissions can cause severe health hazards to human beings on long-term exposure. Thus, there is a desire and need in the art to develop suitable replacement materials. For example, thermoplastic based materials have been considered as a viable replacement for the traditional epoxies and unsaturated polyesters. Thermoplastic based materials exhibit advantages, such as, being recyclable and comparatively sustainable; they can be manufactured at a lower cost and faster cycle times than corresponding thermoset materials; they can increase design flexibility (wall thickness reduction, press-fit features, and the like) and they are lightweight, which provides for ease of installation. However, thermoplastic based materials also have disadvantages associated therewith, such as, they have high moisture absorption; they are susceptible to ultraviolet light and ozone damage; and they generally exhibit poor environmental resistance as compared to thermoset materials.

WO 2021 090 095 A1 relates to a non-halogenated flame retardant and reinforced poly(alkylene Terephtalate) Poly(phenylene Ether) composition having a specific ratio of the two polymer components in combination with a reinforcing mineral filler, glass fibers, main and auxiliary flame retardant components, a compatibilizing agent and an impact modifier.

EP 2 588 531 A1 relates to flame resistant polyester compositions having inter alia a flame retardant synergist, a flame retardant, an impact modifier, and a stabilizer. Furthermore US 2016 289 416 A1 relates to hot-vulcanisable polyorganosiloxane compositions for electrical cables or wires having different additives.

Thus, there continues to be a need in the art to develop improved thermoplastic based composites, e.g., polymers, for encapsulating and insulating electrical components that exhibit the desirable properties of thermoplastic materials while minimizing or precluding the disadvantages that are associated therewith. In accordance with the disclosed concept, filler(s) and additive(s) may be incorporated, e.g., loaded, into a thermoplastic polymer matrix in order to improve its electrical properties, and capability to quench high-energy arcs for circuit protection.

### SUMMARY

The aforementioned needs and others are met by embodiments of the disclosed concept, which provide thermoplastic based composites for insulation materials for electrical contact and non-contact applications, to withstand arcing and electrical discharge during a short circuit event to ensure circuit protection.

In accordance with the present invention, a thermoplastic based composite insulator as set forth in claim 1, an electrical contact / non-contact component as set forth in claim 6 and a method for insulating an electrical contact / non-contact component as set forth in claim 9 are provided. Further embodiments are inter alia disclosed in the dependent claims.

In one aspect, the disclosed concept provides a thermoplastic based composite insulator, including from 30 to 70 percent by weight of a thermoplastic polymer matrix; from 10 to 40 percent by weight of a non-halogenated flame retardant filler; from 0.1 to 2 percent by weight of a processing aid and interfacial adhesion promoter selected from the group consisting of fumed alumina, fumed silica, polyhedral-oligomeric-silsesquioxane, and blends and mixtures thereof; from 5 to 40 percent by weight of a reinforcing filler comprising glass fibers; and from 5 to 15% by weight of a functional filler selected from the group consisting of nanoclay, nanotalc, mica, and blends and mixtures thereof, wherein the thermoplastic based composite insulator is in a form selected from housing, casing, enclosure, encapsulated or over-molded part for an electrical contact / non-contact component, and wherein the thermoplastic based composite insulator is effective to quench a high-energy arc generated during a short-circuit event.

The thermoplastic polymer matrix may be selected from the group consisting of polybutylene terephthalate, polyethylene terephthalate, polyamide, poly carbonate, polyphenylene ether, polyphenylene sulfide, polyoxymethylene, polyacetal, polypropylene, polyethylene, polyetherimide, polyetherether ketone, polyether sulfone, and blends and mixtures thereof. The thermoplastic polymer matrix may be selected from the group consisting of polybutylene terephthalate (PBT), polyamide (PA) and blends and mixtures thereof.

The non-halogenated flame retardant filler is selected from the group consisting of phosphorus-based compound, phosphate-based compound, metal hydroxide based compound, and blends and mixtures thereof. The non-halogenated flame retardant filler may be selected from the group consisting of melamine polyphosphate, melamine phosphinate, metal phosphonate, zirconium phosphate, aluminium based oxide, magnesium based oxide, magnesium based hydroxides, aluminium based hydroxides, zinc borate, metal oxides, and blends and mixtures thereof. The non-halogenated flame retardant filler may be selected from the group consisting of a metal hydroxide based compound and aluminium monohydrate, and optionally mica.

In certain embodiments, a non-carbon colorant is added to achieve a black color while maintaining arc / tracking resistance.

In another aspect, the disclosed concept provides an electrical contact / non-contact component housed in a thermoplastic based composite, including from 30 to 70 percent by weight of a thermoplastic polymer matrix; from 10 to 40 percent by weight of a non-halogenated flame retardant filler; from 0.1 to 2 percent by weight of a processing aid and interfacial adhesion promoter; from 5 to 40 percent by weight of a reinforcing filler; and from 5 to 15% by weight of a functional filler, wherein the thermoplastic based composite is in a form selected from casing, enclosure, encapsulated or over-molded part, and wherein the thermoplastic based composite is effective to quench a high-energy arc generated during a short-circuit event.

The thermoplastic based composite may provide arc resistance from 120 to 180 sec, comparative tracking index from 400 to 600 volts, flame retardant rating from V2 to V0 and dielectric strength from 15 to 25 kV/mm. The component may have low voltage application with an insulation capability from 12 to 240V with a 15-30A rating. The component may be positioned in an indoor or quasi-indoor environment. The thermoplastic based composite may house a miniature circuit breaker, or arc and ground fault circuit breaker.

In still another aspect, the disclosed concept provides a method for insulating an electrical contact / non-contact component with a thermoplastic based composite. The method includes combining from 30 to 70 percent by weight of a thermoplastic polymer, from 10 to 40 percent by weight of a non-halogenated flame retardant filler, from 0.1 to 2 percent by weight of a processing aid and interfacial adhesion promoter, from 5 to 40 percent by weight of a reinforcing filler, and from 5 to 15 percent by weight of a functional filler, to form the thermoplastic based composite; constructing the electrical contact / non-contact component of the thermoplastic based composite; positioning the electrical contact / non-contact component in an indoor or quasi-indoor environment.

The step of constructing may include a process selected from the group consisting of applying, depositing and positioning the thermoplastic based composite to encapsulate the electrical contact / non-contact component. The step of constructing may include introducing the thermoplastic based composite into an injection or compression molding process.

### DESCRIPTION OF THE PREFERRED EMBODIMENTS

The disclosed concept generally relates to thermoplastic based materials, e.g., thermoplastic based composites, that are suitable replacements for known thermoset based materials, e.g., unsaturated polyesters, as insulators for circuit protection in electrical contact / non-contact applications, such as, but not limited to, housings, casings, enclosures, and encapsulated or over-molded parts, that house or enclose one or more electrical components including connectors, relay components, switch, circuit breakers, electromagnetic switches, terminal block, ground faults and arc fault breakers, actuators and insulation component, terminal switch, sensors and the like. The housings, casings, enclosures, and encapsulated or over-molded parts are composed and/or constructed of, fully or partially, the thermoplastic based composites according to the disclosed concept. Alternatively, the housings, casings, enclosures, and encapsulated or over-molded parts have deposited on or applied to a surface thereof a coating, layer or film that includes the thermoplastic based composites of the disclosed concept. In certain embodiments, the housings, casings, enclosures, and encapsulated or over-molded parts house or enclose miniature circuit breakers, and arc and ground fault circuit breakers. For example, the casing functions like a lid, a base, or a combination of a lid and a base to cover the component(s) housed therein.

The thermoplastic based materials are used as insulators in electrical contact / non-contact applications, e.g., housings, casings, enclosures and encapsulated or over-molded parts, for operational environments that include indoor or quasi-indoor (within a closed/open room environment) and more particularly, the applications are low voltage applications, such as, residential applications with an insulation capability from 12 to 240V, with a 15-30A rating.

The insulators ensure circuit protection by quenching the high-energy arc generated by electric discharge. Further, the insulators ensure safety by retaining adequate dielectric strength during short-circuit events. Traditional electrical or electronics housings, enclosures and over-molded or encapsulated parts formed of thermoset based polymer / plastic materials are non-recyclable, landfilled or incinerated and generally have higher carbon footprints and handprints. The use of thermoplastic based materials that are recyclable, more environmentally friendly and have a lower carbon footprint and handprint, overcome the problems associated with thermoset materials. However, thermoplastic based materials in their pristine form do not have the inherent capability to withstand high energy arcing and tracking. Hence, the thermoplastic based materials are incorporated, e.g., loaded, with appropriate ingredients or fillers such as flame retardants, mineral fillers and reinforcements in nano or micro form, to impart to the thermoplastic based materials the advantageous properties, e.g., capability to withstand high energy arcing and tracking, that are inherent in thermoset based materials.

The disclosed concept also includes methods for preparing the thermoplastic based composites, and methods for applying these thermoplastic based composites as insulators for circuit protection in electrical contact / non-contact applications.

According to the disclosed concept, a thermoplastic based composite is newly developed by incorporating, e.g., loading, into a thermoplastic polymer, e.g., matrix, one or more fillers that will impart one or more advantageous or desired properties, e.g., inherent in the thermoset based materials. The thermoplastic based materials developed are complaint to EPA and California prop regulations, as well as being REACH and RoHS compliant, with reduced carbon footprints and handprints, and exhibit flame retardance, arc resistance, tracking resistance, dielectric strength and long-term static / dynamic mechanical and thermal properties needed for the intended application of circuit protection in electrical contact / non-contact applications. These materials and formulations are prepared and processed through a series of operations including pulverization, high shear mixing, extrusion and injection molding techniques / processes.

The thermoplastic based composites include a polymer matrix of thermoplastic polymer(s) or blends or mixtures thereof. Suitable thermoplastic polymers for use are selected from a wide variety of known thermoplastic polymers, such as, but not limited to polybutylene terephthalate (PBT), polyethylene terephthalate (PET), polyamide(s) (PA) (nylon) (PA6, PA66, PA6T, PA9T, PA12, PA4T), poly carbonate (PC), polyphenylene ether (PPE), polyphenylene sulfide (PPS), polyoxymethylene (POM) or polyacetal, polypropylene (PP), polyethylene (HDPE, LDPE), polyetherimide (PEI), polyetherether ketone (PEEK), polyether sulfone (PES) and blends and mixtures thereof. In certain embodiments, the thermoplastic polymer is selected from polybutylene terephthalate (PBT), polyamide (PA) and blends and mixtures thereof. The amount or concentration of thermoplastic polymer in the thermoplastic based composite varies. In certain embodiments, the thermoplastic polymer is present in a concentration range from 30 to 70% based on total weight of the thermoplastic based composite.

The thermoplastic polymer(s) or blend or mixture thereof, e.g., matrix, is/are incorporated or loaded with one or more filler components including flame retardant filler, processing aid and interfacial adhesion promoter, functional filler, and reinforcing filler, to form the thermoplastic based composites.

The flame retardant filler is present in the thermoplastic based composite for arc quenching (electrical arc). During a short circuit event, the arc which is generated ionizes the oxygen present in the air and converts the oxygen into oxygen free radicals (plasma medium). The generated plasma medium carries an enormous amount of energy which needs to be quenched to prevent the arc from propagating into a progressive fire. The flame retardant filler, on exposure to high energy (during arcing event), starts outgassing. During outgassing, the flame retardant filler generates free radicals into the environment. These free radicals pair with the oxygen free radicals to inhibit the plasma. This phenomena is responsible for quenching of the arc.

Suitable flame retardant fillers include those that release free radicals during an arcing event. For example, halogen based compounds are effective in quenching the arc, because they release bromide or chloride ions during outgassing to quench the arc plasma. However, halogen based flame retardants have been banned by the Environmental Protection Agency (EPA) due to their toxic effects on the environment and human life. According to the disclosed concept, non-halogenated based flame retardants are provided as alternatives to halogen based flame retardants. In certain embodiments, the non-halogenated based flame retardant filler includes one or more of phosphorus and phosphate-based compounds and/or metal hydroxide based compounds, which are capable of releasing free radicals upon exposure to high energy and subsequently inhibiting oxygen plasma generated by the short circuit event, while being compliant with EPA and California prop regulations and meeting REACH and RoHS requirements. The non-halogenated based flame retardant filler includes standalone (or single) compounds and/or synergistic combinations or compositions of non-halogenated based flame retardants, such as, but not limited to melamine polyphosphates and/or phosphinate, metal phosphinate, zirconium phosphate, aluminium or magnesium based oxides or hydroxides, zinc borates, metal oxides, and blends and mixtures thereof. The amount or concentration of the non-halogenated based flame retardant filler in the thermoplastic based composite varies. In certain embodiments, the non-halogenated based flame retardant filler is present in a concentration range from 10 to 40% based on total weight of the thermoplastic based composite.

The arcing phenomenon during the short circuit event includes the following four stages: 1) arc generation, 2) arc discharge (air and surface), 3) arc tracking (surface) and 4) arc extinction. The flame retardant filler-loaded thermoplastic based composite responds to stage 2) by delaying the arc formation on the insulator surface and releasing free radicals during outgassing to inhibit the plasma. During stage 3, the flame retardant filler-loaded thermoplastic composite forms a barrier layer with minimal charring and in stage 4, provides for endothermic cooling of the substrate.

In certain embodiments, the flame retardant filler, e.g., non-halogenated flame retardant filler, is selected and incorporated or loaded into the thermoplastic polymer matrix to provide flame inhibition during a gas phase of the short circuit event. For example, melamine polyphosphate (MPP) generates PO₂⁻, PO₃⁻ and PO⁻ free radicals during the gas phase, and N₂ inert gas is released during pyrolysis. Also, for example, metal phosphinate generates AlPO₂ free radicals and non-combustible gases during the gas phase. In certain other embodiments, the flame retardant filler, e.g., non-halogenated flame retardant filler, is selected and incorporated or loaded into the thermoplastic polymer matrix to provide radical scavenging during both a gas phase and condensed phase. For example, aluminum monohydrate generates H+ OH- free radical, and forms a metal oxide layer, as well as, forms water.

The processing aid and interfacial adhesion promoter includes one or more of fumed alumina, fumed silica, polyhedral-oligomeric-silsesquioxane (POSS), and blends and mixtures thereof. The amount or concentration of the processing aid and interfacial adhesion promoter incorporated or loaded into the thermoplastic based composite varies. In certain embodiments, the processing aid and interfacial adhesion promoter is present in a concentration range from 0.1 to 2% based on total weight of the thermoplastic based composite. In certain embodiments, improved dielectric properties are achieved by the addition of the processing aid and interfacial adhesion promoter, e.g., fumed alumina and/or fumed silica.

The reinforcing filler includes glass fibers. The amount or concentration of the reinforcing filler incorporated or loaded into the thermoplastic composite varies. In certain embodiments, the reinforcing filler is present in a concentration range from 5 to 40% based on total weight of the thermoplastic based composite. In certain embodiments, improved strength and thermal conductivity are achieved by the addition of the glass fibers.

The functional filler includes clay, mica, talc or mixtures or blends thereof. The amount or concentration of the functional filler incorporated or loaded into the thermoplastic based composite varies. In certain embodiments, the functional filler is present in a concentration range from 5 to 15% based on total weight of the thermoplastic based composite. Further, the form of functional filler varies. In certain embodiments, the functional filler is in the form of nano particles, e.g., nanotalc and/or nanoclay, and/or micro particles.

In certain embodiments, a non-carbon colorant is added to the thermoplastic based composite to achieve a desired black color without sacrificing arc / tracking resistance, e.g., arc / tracking resistance is maintained.

The newly developed thermoplastic based composite formulations enhance one or more of the following properties and characteristics of the thermoplastic polymer: arc resistance from 120 to 180 sec (PLC5 and PLC4), comparative tracking index (CTI) from 400 to 600 volts, flame retardant rating from V2 to V0, and dielectric strength from 15 to 25 kV/mm. In certain embodiments, the dielectric strength can be improved by 1.5 to 3 times.

The newly developed thermoplastic based composite formulations, and the housings, casings, enclosures and encapsulated or over-molded parts that are fully or partially composed or constructed therefrom, provide one or more of the following arc quenching mechanisms or behaviors: quenches and inhibits the ions and plasma generated during arc; does not release any toxic gases; works on both a gaseous and condensed/substrate phase; and promotes non-carbonaceous char formation.

According to the disclosed concept, the thermoplastic based composite formulations are applicable to form and/or construct electrical / electronic housings, casings, enclosures and encapsulated or over-molded parts that house one or more electrical / electronic components including connectors, relay components, switches, circuit breakers, e.g., miniature circuit breakers, electromagnetic switches, terminal blocks, ground faults and arc fault breakers, actuators and insulation components, terminal switches, and sensors.

The thermoplastic based composites are effective as insulators to provide circuit protection, and have the capability to pass the short-circuit test. For example, a thermoplastic based composite comprising polybutylene terephthalate passes the short-circuit test with outstanding performance. The UL489 Sequence Z program is used as a representation of a polymer's ability to repeatably interrupt short circuit faults and retain its insulating properties when the breaker is turned OFF and the contacts are separated. A 20 Amp circuit breaker rated 120/240V is tested in pairs. A short circuit fault of 5,000 Amps is performed 3 times. The power factor is set to between 0.45-0.50. Following the short circuit testing, the Sequence Z procedure requires that the circuit breaker undergo dielectric voltage-withstand testing. A 120/240V circuit breaker in the OFF and tripped position must withstand 1,480V (7.1.9) without breakdown for 60 seconds. The test equipment monitors the leakage current on the load-side connection.

In certain embodiments, the polybutylene terephthalate-comprising thermoplastic based composite is loaded with a metal-hydroxide based non-halogenated flame retardant filler. In certain embodiments, the metal-hydroxide based non-halogenated flame retardant filler is aluminum monohydrate (a.k.a Boehmite), which is optionally combined with mica. This thermoplastic based composite is applicable to both the gas phase and condensed phase, and is very effective in arc quenching. In addition, the thermoplastic based composite promotes less charring after the arcing event, which is important as the carbonaceous charring potentially promotes dielectric failure because it is conductive in nature.

In accordance with the disclosed concept, a thermoplastic based composite is positioned such as to encompass an exterior surface of an electrical component, as an insulator. The thermoplastic based composite can provide a variety of desirable properties based on the specific fillers selected in forming the thermoplastic based composite. The thermoplastic based composite can be employed in a variety of applications including housing, casing, molding, and encapsulation for circuit protection of an electrical component.

A thermoplastic based material is generally described as a plastic material, e.g., polymer, that becomes pliable or moldable above a specific temperature (e.g., softens or fuses with heat) and, solidifies (e.g., hardens and becomes rigid) with cooling. As previously described, the thermoplastic based composites of the disclosed concept include thermoplastic polymer, e.g., a thermoplastic polymer matrix. Suitable thermoplastic polymers for use in the disclosed concept are commercially available, such as, polybutylene terephthalate resin under the trade names PBT - CRASTIN^{®} LW9030 NC010 (DuPont), PBT - ULTRADUR^{®} B4450GF (BASF) and PBT - CELANEX^{®} XFR 6842 GF30(Celanese).

Generally, the term "nano-size" or "nanoparticle" refers to a particulate material having an average particle or grain size between 1 and 100 nanometers. Nanoparticles are distinguishable from particles having a particle size in the micron range. That is, the term "micro-size" and "microparticle" refers to particulate material having an average particle or grain size greater than about 1 µm. Nanoparticles of any size, that is, ranging from about 1 nm to less than about 100 nm can be used in the compositions of the disclosed concept.

The micro-size and/or nano-size fillers can include micro-particle, micro-tube, micro-platelet, micro-fiber, nanoparticle, nanotube, nanoplatelet, nano-fiber and blends thereof, and may be specifically selected and added to impart improved electrical properties to the thermoplastic based composite. For example, the thermoplastic polymer matrix, e.g., resin, generally exhibits lower dielectric properties than the filler. Non-limiting examples of micro-size and/or nano-size filler include alumina, silica, POSS, glass fibers, other inorganic materials, and blends thereof. These fillers provide improved dielectric properties of the thermoplastic based composite.

The thermoplastic based composites are prepared according to conventional methods and processes, using traditional techniques and apparatus. For example, the thermoplastic polymer, e.g., thermoplastic polymer matrix, e.g., resin, and filler(s) are combined together to form a mixture or blend. The order of combining these components, e.g., loading the filler(s) into the thermoplastic polymer matrix, is not critical, and is typically conducted at room temperature and atmospheric pressure conditions. In certain embodiments, a twin-screw extrusion process is used for compounding the new thermoplastic based formulation / composite, followed by conventional molding methods such as injection molding, compression molding or additive manufacturing, and the like, to produce the part, e.g., housing, casings, enclosures and encapsulated or over-molded parts.

The thermoplastic based composites of the disclosed concept form a casing, enclosure, encapsulated or over-molded part using various conventional methods and processes. Conventional insulation or encapsulation materials are formed using a casting process, which includes a time period, e.g., about 8-10 hours, for setting/curing. Whereas, in certain embodiments of the disclosed concept, an electrical component is directly housed, insulated or encapsulated with the thermoplastic based composite. For example, the polymer / filler formulation produces a thermoplastic based composite that is applied, deposited or positioned onto the surface of an electrical component. In other embodiments, the electrical component is indirectly housed, insulated or encapsulated with the thermoplastic based composite. In these embodiments, a conventional injection molding process or compression molding process, and associated apparatus are typically employed. The polymer / filler formulation is injected into a mold to form a thermoplastic based composite shell. The electrical component is then positioned inside of this outer shell. Whether the electrical component is directly or indirectly housed or encapsulated with the thermoplastic based composite, there is optionally a buffer between the electrical component surface and the thermoplastic based composite. In certain embodiments, the buffer is in the form of an air space or a material, such as, but not limited to, a polyurethane potting material, positioned between the electrical component surface and the thermoplastic based composite.

In certain other embodiments, the thermoplastic based composite is formed using conventional additive manufacturing processes, and associated apparatus.

In yet other embodiments, the thermoplastic based composite is applied to the surface of the electrical component as a coating, layer or film. The thermoplastic based composite is applied by employing conventional thermal deposition processes. Prior to applying the thermoplastic based composite, the surface of the electrical component is optionally subjected to a preparation process. The preparation process includes a pre-coating or pre-treatment to the surface to facilitate or enhance applying and/or adhering of the thermoplastic based composite thereto.

The thermoplastic based composites include a broad range of thicknesses. In certain embodiments, the thermoplastic based composites are injected molded parts that have a thickness in a range of from about 0.5 mm to a few inches. In other embodiments, wherein the thermoplastic composites are a coating or film, the thickness can be from about 10 microns to about 225 microns.

## Claims

1. A thermoplastic based composite insulator, comprising:
from 30 to 70 percent by weight of a thermoplastic polymer matrix;
from 10 to 40 percent by weight of a non-halogenated flame retardant filler;
from 0.1 to 2 percent by weight of a processing aid and interfacial adhesion promoter selected from the group consisting of fumed alumina, fumed silica, polyhedral-oligomeric-silsesquioxane, and blends and mixtures thereof;
from 5 to 40 percent by weight of a reinforcing filler comprising glass fibers; and
from 5 to 15% by weight of a functional filler selected from the group consisting of nanoclay, nanotalc, mica, and blends and mixtures thereof,
wherein the thermoplastic based composite insulator is in a form selected from housing, casing, enclosure, encapsulated or over-molded part for an electrical contact / non-contact component, and
wherein the thermoplastic based composite insulator is effective to quench a high-energy arc generated during a short-circuit event for voltage applications with an insulation capability from 12 to 240V with a 15-30A rating.

2. The thermoplastic based composite insulator of claim 1, wherein the thermoplastic polymer matrix is selected from the group consisting of polybutylene terephthalate, polyethylene terephthalate, polyamide, poly carbonate, polyphenylene ether, polyphenylene sulfide, polyoxymethylene, polyacetal, polypropylene, polyethylene, polyetherimde, polyetherether ketone, polyether sulfone, and blends and mixtures thereof.

3. The thermoplastic based composite insulator of claim 1, wherein the non-halogenated flame retardant filler is selected from the group consisting of phosphorus-based compound, phosphate-based compound, metal hydroxide based compound, and blends and mixtures thereof.

4. The thermoplastic based composite insulator of claim 1, wherein the non-halogenated flame retardant filler is selected from the group consisting of melamine polyphosphate, melamine phosphinate, metal phosphonate, zirconium phosphate, aluminium based oxide, magnesium based oxide, magnesium based hydroxides, aluminium based hydroxides, zinc borate, metal oxides, metal hydroxide based compounds, aluminium monohydrate, mica, and blends and mixtures thereof.

5. The thermoplastic based composite insulator of claim 1, wherein a non-carbon colorant is added to achieve a black color while maintaining arc / tracking resistance.

6. An electrical contact / non-contact component housed in a thermoplastic based composite, comprising:
from 30 to 70 percent by weight of a thermoplastic polymer matrix;
from 10 to 40 percent by weight of a non-halogenated flame retardant filler;
from 0.1 to 2 percent by weight of a processing aid and interfacial adhesion promoter selected from the group consisting of fumed alumina, fumed silica, polyhedral-oligomeric-silsesquioxane, and blends and mixtures thereof;
from 5 to 40 percent by weight of a reinforcing filler comprising glass fibers; and
from 5 to 15% by weight of a functional filler selected from the group consisting of nanoclay, nanotalc, mica, and blends and mixtures thereof,
wherein the thermoplastic based composite is in a form selected from casing, enclosure, encapsulated or over-molded part, and
wherein the thermoplastic based composite is effective to quench a high-energy arc generated during a short-circuit event for voltage applications with an insulation capability from 12 to 240V with a 15-30A rating.

7. The electrical contact / non-contact component of claim 6, wherein the thermoplastic based composite provides arc resistance from 120 to 180 sec, comparative tracking index from 400 to 600 volts, flame retardant rating from V2 to V0 and dielectric strength from 15 to 25 kV/mm.

8. The electrical contact / non-contact component of claim 9, wherein said component is positioned in an indoor or quasi-indoor environment and selected from a miniature circuit breaker, and an arc and a ground fault circuit breaker.

9. A method for insulating an electrical contact / non-contact component with a thermoplastic based composite, comprising:
combining from 30 to 70 percent by weight of a thermoplastic polymer, from 10 to 40 percent by weight of a non-halogenated flame retardant filler, from 0.1 to 2 percent by weight of a processing aid and interfacial adhesion promoter selected from the group consisting of fumed alumina, fumed silica, polyhedral-oligomeric-silsesquioxane, and blends and mixtures thereof, from 5 to 40 percent by weight of a reinforcing filler comprising glass fibers, and from 5 to 15 percent by weight of a functional filler selected from the group consisting of nanoclay, nanotalc, mica, and blends and mixtures thereof, to form the thermoplastic based composite;
constructing the electrical contact / non-contact component of the thermoplastic based composite; and
positioning the electrical contact / non-contact component in an indoor or quasi-indoor environment,
wherein the thermoplastic based composite insulator is effective to quench a high-energy arc generated during a short-circuit event for voltage applications with an insulation capability from 12 to 240V with a 15-30A rating.

10. The method of claim 9, wherein the step of constructing comprises a process selected from the group consisting of applying, depositing and positioning the thermoplastic based composite to encapsulate the electrical contact / non-contact component.

11. The method of claim 9, wherein the step of constructing comprises introducing the thermoplastic based composite into an injection or compression molding process.

## Patentansprüche

1. Verbundisolator auf thermoplastischer Basis, der Folgendes aufweist:
von 30 bis 70 Gew.-% einer thermoplastischen Polymermatrix;
von 10 bis 40 Gew.-% eines nichthalogenierten flammhemmenden Füllstoffs;
von 0,1 bis 2 Gew.-% eines Verarbeitungshilfsmittels und Grenzflächenhaftverbesserers, ausgewählt aus der Gruppe bestehend aus pyrogenem Aluminiumoxid, pyrogenem Siliziumdioxid, polyedrisch-oligomerem Silsesquioxan sowie Mischungen und Gemischen davon;
von 5 bis 40 Gew.-% eines verstärkenden Füllstoffs, der Glasfasern aufweist; und
von 5 bis 15 Gew.-% eines funktionellen Füllstoffs, der ausgewählt ist aus der Gruppe bestehend aus Nanoton, Nanotalk, Glimmer sowie Mischungen und Gemischen davon,
wobei der Verbundisolator auf thermoplastischer Basis in einer Form vorliegt, die aus ausgewählt ist Folgendem: einem Gehäuse, einer Ummantelung, einer Einfassung, einem eingekapselten oder umspritzten Teil für eine elektrische Kontakt-/kontaktlose Komponente, und
wobei der Verbundisolator auf thermoplastischer Basis geeignet ist, um einen während eines Kurzschlussereignisses erzeugten energiereichen Lichtbogen für Spannungsanwendungen mit einer Isolierfähigkeit von 12 bis 240 V mit einer Nennleistung von 15-30 A zu unterdrücken.

2. Verbundisolator auf thermoplastischer Basis nach Anspruch 1, wobei die thermoplastische Polymermatrix ausgewählt ist aus der Gruppe bestehend aus Polybutylenterephthalat, Polyethylenterephthalat, Polyamid, Polycarbonat, Polyphenylenether, Polyphenylensulfid, Polyoxymethylen, Polyacetal, Polypropylen, Polyethylen, Polyetherimde, Polyetheretherketon, Polyethersulfon und Mischungen und Gemischen davon.

3. Verbundisolator auf thermoplastischer Basis nach Anspruch 1, wobei der nichthalogenierte flammhemmende Füllstoff ausgewählt ist aus der Gruppe bestehend aus einer Verbindung auf Phosphorbasis, einer Verbindung auf Phosphatbasis, einer Verbindung auf Metallhydroxidbasis und Mischungen und Gemischen davon.

4. Verbundisolator auf thermoplastischer Basis nach Anspruch 1, wobei der nichthalogenierte flammhemmende Füllstoff ausgewählt ist aus der Gruppe bestehend aus Melaminpolyphosphat, Melaminphosphinat, Metallphosphonat, Zirkonphosphat, Oxid auf Aluminiumbasis, Oxid auf Magnesiumbasis, Hydroxiden auf Magnesiumbasis, Hydroxiden auf Aluminiumbasis, Zinkborat, Metalloxiden, Verbindungen auf Metallhydroxidbasis, Aluminiummonohydrat, Glimmer sowie Mischungen und Gemischen davon.

5. Verbundisolator auf thermoplastischer Basis nach Anspruch 1, dem ein kohlenstofffreier Farbstoff zugesetzt wird, um eine schwarze Farbe zu erzielen und gleichzeitig die Lichtbogen- bzw. Kriechstromfestigkeit zu erhalten.

6. Elektrische Kontakt-/kontaktlose Komponente, die in einem Verbundwerkstoff auf thermoplastischer Basis eingehaust ist und Folgendes aufweist:
von 30 bis 70 Gew.-% einer thermoplastischen Polymermatrix;
von 10 bis 40 Gew.-% eines nichthalogenierten flammhemmenden Füllstoffs;
von 0,1 bis 2 Gew.-% eines Verarbeitungshilfsmittels und Grenzflächenhaftverbesserers, ausgewählt aus der Gruppe bestehend aus pyrogenem Aluminiumoxid, pyrogenem Siliziumdioxid, polyedrisch-oligomerem Silsesquioxan sowie Mischungen und Gemischen davon;
von 5 bis 40 Gew.-% eines verstärkenden Füllstoffs, der Glasfasern aufweist; und
von 5 bis 15 Gew.-% eines funktionellen Füllstoffs, der ausgewählt ist aus der Gruppe bestehend aus Nanoton, Nanotalk, Glimmer sowie Mischungen und Gemischen davon,
wobei der Verbundstoff auf thermoplastischer Basis in einer Form vorliegt, die ausgewählt ist aus Folgendem: einem Gehäuse, einer Ummantelung, einem eingekapselten oder umspritzten Teil, und
wobei der Verbundstoff auf thermoplastischer Basis geeignet ist, um einen während eines Kurzschlussereignisses erzeugten energiereichen Lichtbogen für Spannungsanwendungen mit einer Isolierfähigkeit von 12 bis 240 V mit einer Nennleistung von 15-30 A zu unterdrücken.

7. Elektrische Kontakt-/kontaktlose Komponente nach Anspruch 6, wobei der Verbundstoff auf thermoplastischer Basis eine Lichtbogenbeständigkeit von 120 bis 180 s, einen Vergleichswert für die Kriechstromfestigkeit von 400 bis 600 Volt, eine Flammfestigkeit von V2 bis V0 und eine Durchschlagfestigkeit von 15 bis 25 kV/mm aufweist.

8. Elektrische Kontakt-/kontaktlose Komponente nach Anspruch 9, wobei die Komponente in einer Innenraum- oder Quasi-Innenraumumgebung angeordnet ist und aus einem Miniatur-Leistungsschalter sowie einem Lichtbogen- und einem Erdschluss-Leistungsschalter ausgewählt ist.

9. Verfahren zur Isolierung einer elektrischen Kontakt-/kontaktlosen Komponente mit einem Verbundstoff auf thermoplastischer Basis, aufweisend:
Kombinieren von 30 bis 70 Gew.-% eines thermoplastischen Polymers, von 10 bis 40 Gew.-% eines nichthalogenierten flammhemmenden Füllstoffs, von 0,1 bis 2 Gew.-% eines Verarbeitungshilfsmittels und Grenzflächenhaftverbesserers, ausgewählt aus der Gruppe bestehend aus pyrogenem Aluminiumoxid, pyrogenem Siliziumdioxid, polyedrisch-oligomerem Silsesquioxan und Mischungen und Gemischen davon, von 5 bis 40 Gew.-% eines verstärkenden Füllstoffs, der Glasfasern aufweist, und 5 bis 15 Gew.-% eines funktionellen Füllstoffs, ausgewählt aus der Gruppe bestehend aus Nanoton, Nanotalk, Glimmer und Mischungen und Gemischen davon, um den Verbundstoff auf thermoplastischer Basis zu bilden;
Konstruieren der elektrischen Kontakt-/kontaktlosen Komponente des Verbundstoffs auf thermoplastischer Basis; und
Positionieren der elektrischen Kontakt-/kontaktlosen Komponente in einer Innenraum- oder Quasi-Innenraumumgebung,
wobei der Verbundisolator auf thermoplastischer Basis geeignet ist, um einen während eines Kurzschlussereignisses erzeugten energiereichen Lichtbogen für Spannungsanwendungen mit einer Isolierfähigkeit von 12 bis 240 V mit einer Nennleistung von 15-30 A zu unterdrücken.

10. Verfahren nach Anspruch 9, wobei der Schritt des Konstruierens einen Prozess umfasst, der ausgewählt ist aus der Gruppe bestehend aus dem Aufbringen, Ablagern und Positionieren des Verbundstoffs auf thermoplastischer Basis, um die elektrische Kontakt-/kontaktlose Komponente einzukapseln.

11. Verfahren nach Anspruch 9, wobei der Schritt des Konstruierens das Einführen des Verbundstoffs auf thermoplastischer Basis in ein Spritzguss- oder Formpressverfahren aufweist.

## Revendications

1. Isolateur composite à base de thermoplastique, comprenant :
de 30 à 70 % en poids d'une matrice de polymère thermoplastique ;
de 10 à 40 % en poids d'une charge ignifuge non halogénée ;
de 0,1 à 2 % en poids d'un adjuvant de traitement et d'un promoteur d'adhérence interfaciale choisis parmi le groupe consistant en de l'alumine fumée, de la silice fumée, du silsesquioxane oligomère polyédrique, et des mélanges de ceux-ci ;
de 5 à 40 % en poids d'une charge renforçante comprenant des fibres de verre ; et
de 5 à 15 % en poids d'une charge fonctionnelle choisie parmi le groupe consistant en de la nanoargile, du nanotalc, du mica et des mélanges de ceux-ci,
dans lequel l'isolateur composite à base de thermoplastique se présente sous une forme choisie parmi un logement, un boîtier, une enceinte, une pièce encapsulée ou surmoulée pour un composant à contact / sans contact électrique, et
dans lequel l'isolateur composite à base de thermoplastique est efficace pour étouffer un arc à haute énergie généré lors d'un événement de court-circuit pour des applications sous tension avec une capacité d'isolation de 12 à 240 V avec une valeur nominale de 15 à 30 A.

2. Isolateur composite à base de thermoplastique selon la revendication 1, dans lequel la matrice polymère thermoplastique est choisie parmi le groupe consistant en du téréphtalate de polybutylène, du téréphtalate de polyéthylène, du polyamide, du polycarbonate, du polyphénylène éther, du sulfure de polyphénylène, du polyoxyméthylène, du polyacétal, du polypropylène, du polyéthylène, du polyétherimde, du polyétheréther cétone, du polyéther sulfone, et des mélanges de ceux-ci.

3. Isolateur composite à base de thermoplastique selon la revendication 1, dans lequel la charge ignifuge non halogénée est choisie parmi le groupe consistant en un composé à base de phosphore, un composé à base de phosphate, un composé à base d'hydroxyde de métal, et des mélanges de ceux-ci.

4. Isolateur composite à base de thermoplastique selon la revendication 1, dans lequel la charge ignifuge non halogénée est choisie parmi le groupe consistant en du polyphosphate de mélamine, du phosphinate de mélamine, du phosphonate métallique, du phosphate de zirconium, un oxyde à base d'aluminium, un oxyde à base de magnésium, des hydroxydes à base de magnésium, des hydroxydes à base d'aluminium, du borate de zinc, des oxydes métalliques, des composés à base d'hydroxyde métallique, du monohydrate d'aluminium, du mica, et des mélanges de ceux-ci.

5. Isolateur composite à base de thermoplastique selon la revendication 1, dans lequel un colorant sans carbone est ajouté pour obtenir une couleur noire tout en maintenant la résistance à l'arc / au cheminement.

6. Composant à contact / sans contact électrique logé dans un composite à base de thermoplastique, comprenant :
de 30 à 70 % en poids d'une matrice de polymère thermoplastique ;
de 10 à 40 % en poids d'une charge ignifuge non halogénée ;
de 0,1 à 2 % en poids d'un adjuvant de traitement et d'un promoteur d'adhérence interfaciale choisis parmi le groupe consistant en de l'alumine fumée, de la silice fumée, du silsesquioxane oligomère polyédrique, et des mélanges de ceux-ci ;
de 5 à 40 % en poids d'une charge renforçante comprenant des fibres de verre ; et
de 5 à 15 % en poids d'une charge fonctionnelle choisie parmi le groupe consistant en de la nanoargile, du nanotalc, du mica et des mélanges de ceux-ci,
dans lequel le composite à base de thermoplastique se présente sous une forme choisie parmi un boîtier, une enceinte, une pièce encapsulée ou surmoulée, et
dans lequel le composite à base de thermoplastique est efficace pour étouffer un arc à haute énergie généré lors d'un événement de court-circuit pour des applications sous tension avec une capacité d'isolation de 12 à 240 V avec une valeur nominale de 15 à 30 A.

7. Composant à contact / sans contact électrique selon la revendication 6, dans lequel le composite à base de thermoplastique offre une résistance à l'arc de 120 à 180 secondes, un indice de cheminement comparatif de 400 à 600 volts, un classement ignifuge de V2 à VO et une rigidité diélectrique de 15 à 25 kV/mm.

8. Composant à contact / sans contact électrique selon la revendication 9, dans lequel ledit composant est positionné dans un environnement intérieur ou quasi-intérieur et choisi parmi un disjoncteur miniature, et un disjoncteur de défaut d'arc et de mise à la terre.

9. Procédé d'isolation d'un composant à contact / sans contact électrique avec un composite à base de thermoplastique, comprenant :
la combinaison de 30 à 70 % en poids d'un polymère thermoplastique, de 10 à 40 % en poids d'une charge ignifuge non halogénée, de 0,1 à 2 % en poids d'un adjuvant de traitement et d'un promoteur d'adhérence interfaciale choisis parmi le groupe consistant en de l'alumine fumée, de la silice fumée, du silsesquioxane oligomère polyédrique et des mélanges de ceux-ci, de 5 à 40 % en poids d'une charge renforçante comprenant des fibres de verre et de 5 à 15 % en poids d'une charge fonctionnelle choisie parmi le groupe consistant en de la nanoargile, du nanotalc, du mica et des mélanges de ceux-ci, pour former le composite à base de thermoplastique ;
la construction du composant à contact / sans contact électrique du composite à base de thermoplastique ; et
le positionnement du composant à contact / sans contact électrique dans un environnement intérieur ou quasi-intérieur,
dans lequel l'isolateur composite à base de thermoplastique est efficace pour étouffer un arc à haute énergie généré lors d'un événement de court-circuit pour des applications sous tension avec une capacité d'isolation de 12 à 240 V avec une valeur nominale de 15 à 30 A.

10. Procédé selon la revendication 9, dans lequel l'étape de construction comprend un processus choisi parmi le groupe consistant en l'application, le dépôt et le positionnement du composite à base de thermoplastique pour encapsuler le composant à contact / sans contact électrique.

11. Procédé selon la revendication 9, dans lequel l'étape de construction comprend l'introduction du composite à base de thermoplastique dans un processus de moulage par injection ou par compression.
